# EUROPÄISCHE PATENTANMELDUNG

(11) **EP 0 875 131 A1**
(43) Veröffentlichungstag der Anmeldung: **04.11.1998**
(21) Anmeldenummer: 98105933.0
(22) Anmeldetag: 01.04.1998
(51) Int. Cl.: A01B 35/28

(54) **Landwirtschaftliche Bodenbearbeitungsmaschine**

(30) Priorität: 30.04.1997 DE 29707781 U
(71) Anmelder: Rau, Willy, 73230 Kirchheim (DE); Rau, Dieter, 73230 Kirchheim (DE); Rau, Wolfgang, Prof. Dr.-Ing., 86462 Aystetten (DE); Rau, Siegfried, 73110 Hattenhofen (DE)
(72) Erfinder: Rau, Willy, 73230 Kirchheim (DE)
(74) Vertreter: Patentanwalts-Partnerschaft Rotermund + Pfusch

(57) **Zusammenfassung**

Die Maschine umfaßt zumindest eine quer zur Arbeitsfahrtrichtung der Maschine ausgerichtete und durch Eingriff ihrer Zinken (18) in den Boden passiv angetriebene Zinkenwalze (11,12), deren Zinken (18) als im wesentlichen geradlinige Teile ausgebildet und tangential zu einem zur Walzenachse gleichachsigen Zylinder in voneinander beabstandeten Radialebenen der Zinkenwalze (11,12) angeordnet sind, derart, daß die freien Zinkenenden bei der Arbeitsfahrt in der Drehrichtung der Zinkenwalze (11,12) entgegengesetzter Richtung weisen. Die in Drehrichtung der Zinkenwalze (11,12) weisende vordere Längsseite der Zinken (18) besitzt keilförmiges Profil mit in Drehrichtung weisender Keilspitze, und die entgegengesetzten rückseitigen Längsseiten der Zinken (18) haben ein rinnenförmig konkaves Profil.

## Beschreibung

Die Erfindung betrifft eine landwirtschaftliche Bodenbearbeitungsmaschine, vorzugsweise in Form eines an ein Zugfahrzeug ankoppelbaren, insbesondere geschleppten Gerätes, mit zumindest einer quer zur Fahrtrichtung von Zugfahrzeug bzw. Bodenbearbeitungsmaschine ausgerichteten und durch Eingriff ihrer Zinken in den Boden passiv angetriebenen Zinkenwalze, deren Zinken als im wesentlichen geradlinige Teile ausgebildet und tangential zu einem zur Walzenachse gleichachsigen Zylinder in voneinander beabstandeten Radialebenen der Zinkenwalze angeordnet sind, derart, daß die freien Zinkenenden bei der Arbeits- bzw. Vorwärtsfahrt von Zugfahrzeug bzw. Bodenbearbeitungsmaschine in der Drehrichtung der Zinkenwalze entgegengesetzter Richtung weisen.

Eine derartige Bodenbearbeitungsmaschine ist aus den Druckschriften EP 0 713 636 A2 sowie DE-U 94 18 722 bekannt. Die Zinkenwalzen bestehen dabei im wesentlichen aus einem nach Art eines geschlossenen Zylinders ausgebildeten Achskörper, auf dessen Außenumfang die Zinken befestigt sind. Diese sind im wesentlichen als stabförmige Elemente mit rechteckigem bzw. quadratischem Querschnitt ausgebildet, wobei jeweils zwei einander gegenüberliegende Seiten des quadratischen Querschnittes bzw. die langen Seiten des rechteckigen Querschnittes parallel zu den von den Zinken gebildeten Radialebenen der Walze erstreckt sind. Die freien Enden der Zinken sind zugespitzt.

Im übrigen sind bei dieser bekannten Maschine vorzugsweise zwei Walzen hintereinander angeordnet, wobei die die Zinken aufweisenden Radialebenen der einen Walze zwischen den die Zinken aufweisenden Ebenen der benachbarten Walze angeordnet sind und die Zinken der beiden Walzen kammartig ineinandergreifen.

Die Zinkenwalzen sind an ihren axialen Enden jeweils an einer gemeinsamen Wippe gelagert, die am Rahmen um eine zu den Walzenachsen parallele Achse schwenkbar gehaltert sind, derart, daß bei Schwenkung der Wippe jeweils eine der beiden Zinkenwalzen in Aufwärtsrichtung und die andere Zinkenwalze in Abwärtsrichtung bewegt wird. Um dabei ein zu tiefes Eintauchen der vorderen Zinkenwalze in den zu bearbeitenden Boden bzw. in den von Scharwerkzeugen der Bodenbearbeitungsmaschine vor den Zinkenwalzen aufgeworfenen Erdstrom zu vermeiden, sind die Wippen mit einer Federung versehen, welche die Wippen derart zu neigen sucht, daß die vordere Zinkenwalze angehoben und die hintere Zinkenwalze abgesenkt wird.

Aus der Druckschrift DE-U 89 05 025 ist eine Bodenbearbeitungsmaschine mit einer aktiv angetriebenen Zinkenwalze bekannt, deren Zinken wiederum tangential an einem zylindrischem Achskörper angeordnet sind, jedoch derart, daß die freien Enden der Zinken in Umlaufrichtung der Walze weisen. Die Zinken sind als Schmiedeteile mit V-förmigem Winkelprofil ausgebildet, wobei die keilförmige Längseite der Zinken in Umlaufrichtung (bei Antrieb der Zinkenwalze) weist.

Aus der Druckschrift US 3 766 988 sind aus Zinkenrädern zusammengesetzte Zinkenwalzen mit, in Achsansicht der Walze, spiralig gebogenen Zinken bekannt, welche jeweils etwa radial an den Nabenbereich des jeweiligen Zinkenrades anschließen und mit ihren freien Enden entgegen der Umlaufrichtung der Walze gebogen sind. Die Zinken besitzen einen im wesentlichen dreieckigen Querschnitt mit in Umlaufrichtung der Walze weisender spitzwinkliger Keil- bzw. Messerkante.

Die Walzen sind an einem Rahmenaggregat od.dgl. schräg zur Fahrtrichtung des mit den Walzen bestückten Gerätes angeordnet, so daß die Zinken beim Eindringen in den Boden ausgeprägte Seitwärtsbewegungen relativ zur Fahrtrichtung ausführen.

Aufgabe der Erfindung ist es nun, bei einer landwirtschaflichen Bodenbearbeitungsmaschine der eingangs angegebenen Art ein besonders gutes Arbeitsergebnis bei gleichzeitig besonders preisgünstiger Bauweise zu erzielen.

Diese Aufgabe wird erfindungsgemäß dadurch gelöst, daß die in Drehrichtung der Zinkenwalze weisenden (vorderen) Längsseiten der Zinken keilförmiges Profil mit in Drehrichtung weisender Keilspitze und die entgegengesetzten (rückseitigen) Längsseiten der Zinken rinnenförmig konkaves Profil aufweisen.

Die Erfindung beruht auf dem allgemeinen Gedanken, bei einer passiv durch Eingriff der Zinken in den Boden angetriebenen Zinkenwalze Zinken mit funktionell deutlich unterschiedlich wirkenden vorderen und rückseitigen Längsseiten vorzusehen. Während die keilförmigen vorderen Längsseiten einerseits das Eindrigen der Zinken in den Boden erleichtern und anderseits aufgrund der zur Walzenachse tangentialen Anordnung der Zinken feste Erdbrocken mit hoher Wirksamkeit zerschneiden bzw. zerschlagen, erfassen die rinnenförmig konkaven rückseitigen Längsseiten der Zinken nach deren Eindringen in den Boden relativ große Bodenbereiche, wobei durch die bei der Drehung der Walze zwangsläufig erfolgende Kippbewegung der in den Boden eingedrungenen bzw. eingestochenen Zinken eine intensive Bodenlockerung erfolgt. Darüber hinaus wird durch die rinnenförmig konkave Rückseite der Zinken ein besonders wirksamer passiver Antrieb der Zinkenwalze gewährleistet, da die einem Stillstand der Zinkenwalze bei einer Arbeitsfahrt der Bodenbearbeitungsmaschine entgegenwirkenden Bodenkräfte an den rinnenförmigen Zinkenrückseiten regelmäßig deutlich größer sind als die der Drehung der Zinkenwalze entgegenwirkenden Bodenkräfte an den keilförmigen Zinkenvorderseiten.

Gemäß einer bevorzugten Ausführungsform der Erfindung besitzen die Zinken einen winkelförmigen, insbesondere einen rechtwinklig winkelförmigen Querschnitt, wobei in besonders zweckmäßiger und preiswürdiger Ausgestaltung der Erfindung vorgesehen ist, daß die Zinken aus entsprechend zugeschnittenen Abschnitten eines Walzprofiles aus Stahl od.dgl. bestehen.

Jede Zinke kann an ihrem vom freien Zinkenende abgewandten Ende mit einem Endbereich ihrer keilförmigen Längsseite in die konkave Längsseite der dem vorgenannten Zinkenende benachbarten Zinke hineinragen und mit letzterer verbunden sein. Auf diese Weise bilden alle einer Radialebene der Zinkenwalze zugeordneten Zinken ein die Walzenachse umschließendes ringförmig geschlossenes Vieleck.

Soweit der Achskörper der Walze als walzenförmiger Zylinder ausgebildet ist, liegen dann die Zinken zwischen den Ecken des Vielecks tangential am Zylinderumfang an, wo sie dann durch Verschweißung od.dgl. befestigt sind.

In der Regel besteht der Achskörper der Walze aus einem einzigen, zwischen den axialen Walzenenden durchlaufenden Zylinder. Grundsätzlich ist jedoch auch eine segmentierte Bauweise mit mehreren Zylinderstücken denkbar.

Des weiteren ist bevorzugt vorgesehen, mindestens zwei Walzen hintereinander anzuordnen, wobei die die Zinken aufweisenden Radialebenen einer Walze zwischen den die Zinken aufweisenden Ebenen der benachbarten Walze bzw. Walzen angeordnet sind und die Zinken benachbarter Walzen kammartig ineinandergreifen.

In diesem Zusammenhang ist zweckmäßigerweise vorgesehen, die Abstandsräume zwischen den die Zinken aufweisenden Radialebenen jeder Walze derart eng zu bemessen, daß die kammartig ineinandergreifenden Zinken benachbarter Walzen einerseits berührungsfrei aneinander vorbeilaufen, andererseits jedoch einander von anhaftender Erde und strähnigem Pflanzengut wirksam zu befreien vermögen. Diese Selbstreinigung der benachbart angeordneten Walzen wird durch die erfindungsgemäße Ausbildung und Anordnung der Zinken wirksam begünstigt, denn im Bereich des kammartigen Eingriffes der Zinken benachbarter Walzen weisen einerseits die keilförmigen Vorderseiten der aufgrund der Walzendrehung in Aufwärtsrichtung bewegten Zinken der vorderen Walze nach oben und andererseits die keilförmigen Vorderseiten der aufgrund Walzendrehung in Abwärtsrichtung bewegten Zinken der hinteren Walze nach unten.

Insbesondere bei Einsatz der Maschine auf steinigen Böden sollten an den Walzen in jeder mit Zinken belegten Radialebene mehr als vier Zinken angeordnet sein. Dies ist insofern vorteilhaft, als dann praktisch keine größeren Steine zwischen aufeinanderfolgenden Zinken eingeklemmt werden können, und zwar auch dann nicht, wenn die in benachbarten Radialebenben der Walzen angeordneten Zinken in Achsansicht der Walze zueinander versetzt angeordnet sind, wie es im Hinblick auf ein gutes Rollverhalten der Walzen zweckmäßig ist.

Im übrigen wird hinsichtlich bevorzugter Merkmale der Erfindung auf die Ansprüche sowie die nachfolgend beschriebene Zeichnung verwiesen. Dabei zeigt
- Fig. 1: eine Seitenansicht einer erfindungsgemäßen Bodenbearbeitungsmaschine,
- Fig. 2: ein Detail von Fig. 1 in vergrößerter Darstellung,
- Fig. 3: einen Querschnitt durch einen Zinken einer erfindungsgemäßen Bodenbearbeitungsmaschine und
- Fig. 4: eine Draufsicht auf den eigentlichen Bearbeitungswerkzeugen vorgeschaltete Schieber.

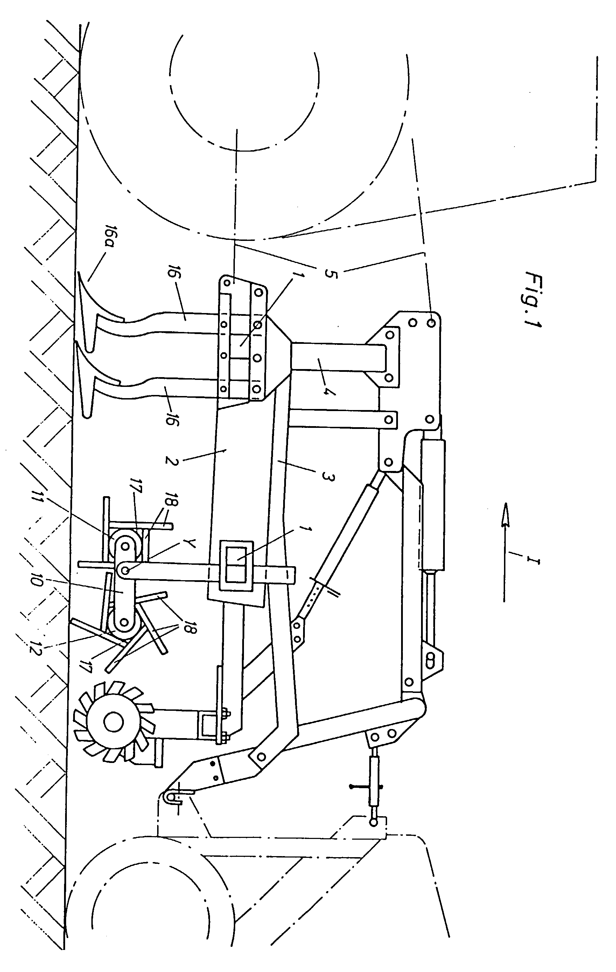

Die in Fig. 1 gezeigte Bodenbearbeitungsmaschine besitzt einen kurzen, relativ hohen Rahmen mit zwei Querholmen 1, welche an ihren Enden durch Seitenplatten 2 miteinander verbunden sind. Die Querholme 1 sind etwa in ihrer Mitte mit Längsholmen 3 eines Rahmenaggregates verbunden, welches einen bockartigen Aufbau 4 aufweist. Der Rahmen ist über Ober- und Unterlenker eines sogenannten Dreipunkt-Gestänges 5 od.dgl. in grundsätzlich bekannter Weise anhebbar und/oder höhenbeweglich mit einem Zugfahrzeug verbindbar. Dabei kann der Rahmen, wie in Fig. 1 dargestellt, an ein Zugfahrzeug angehängt werden. Es ist aber auch möglich, eine Anordnung zu wählen, welche den Anbau frontseitig an ein Zugfahrzeug zuläßt.

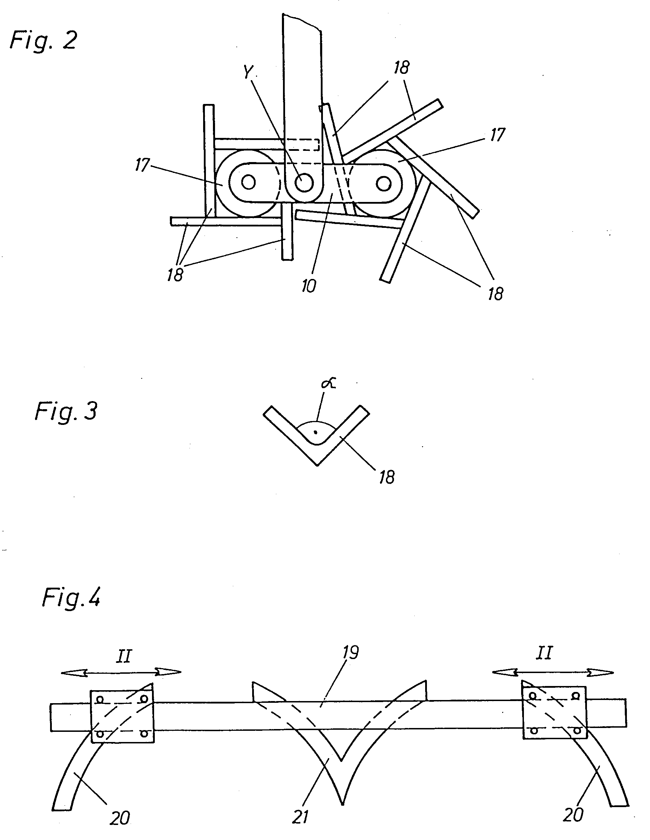

Über den bockartigen Aufbau 4 bzw. das Rahmenaggregat können weitere Werkzeugfolgen für die Sekundärbodenbearbeitung, z.B. Planierschieber, wie sie in Fig. 4 dargestellt sind, Schleppzinken oder Striegel, angeordnet bzw. miteinander kombiniert werden. Auch die Verwendung von Zinkenwalzen allein ist möglich, wobei diese dann auch als Packerwalze einsetzbar sind.

An dem Rahmen sind zwei in Fahrtrichtung hintereinander angeordnete, quer zur Fahrtrichtung I ausgerichtete, durch Zinkeneingriff in den Boden arbeitende und passiv rotierende Zinkenwalzen 11,12 vorgesehen. Die Zinkenwalzen 11,12 sind an ihren axialen Enden an Wippen 10 drehbar gelagert, die gegenüber dem Rahmen um eine quer zur Betriebsfahrtrichtung verlaufende Achse Y schwenkbar sind, so daß bei Schwenkung einer Wippe 10 jeweils eine der an ihr gelagerten Zinkenwalzen 11,12 aufwärts und eine Zinkenwalze abwärts bewegt wird.

Wie insbesondere in Fig. 2 ersichtlich ist, ist die Achse Y gegenüber dem Schwerpunkt der Wippen 10 derart in Betriebsfahrtrichtung nach vorne versetzt vorgesehen, daß auf die Wippen 10 durch das Gewicht der Zinkenwalzen 11,12 ein Drehmoment ausgeübt wird, welches die in Betriebsfahrtrichtung gesehen vordere Zinkenwalze 11 anzuheben und die hintere Zinkenwalze 12 abzusenken sucht.

Die Lager der Zinkenwalzen 11,12 an den Wippen 10 sind derart ausgebildet, daß Taumelbewegungen der Zinkenwalzen 11,12 möglich sind, d.h. es besteht die Möglichkeit, daß die Wippe 10 auf der einen Maschinenseite in eine Richtung und die Wippe 10 auf der anderen Maschinenseite in entgegengesetzter Richtung schwenkt, so daß jede Zinkenwalze 11,12 an ihrem einen seitlichen Ende angehoben und am anderen seitlichen Ende gesenkt wird, wobei sich die Zinkenwalzen 11,12 bei Ansicht in Betriebsfahrtrichtung mehr oder weniger weit gegeneinander verschränken. Durch die Verschwenkbarkeit der Wippen 10 und die taumelfähige Lagerung der Zinkenwalzen 11,12 an den Wippen 10 wird erreicht, daß die Zinkenwalzen 11,12 sich im Betrieb jeweils frei gegenüber dem Rahmen bewegen können, wodurch ein zu tiefes Eintauchen der Zinken 18 in den Erdstrom vermieden bzw. eine gute Anpassung der Walzen 11,12 an Welligkeiten des Bodens gewährleistet wird.

Durch die Versetzung der Schwenkachse Y der Wippe 10 gegenüber deren Schwerpunkt in Betriebsfahrtrichtung I nach vorne wird in einfacher Weise ein optimaler Eingriff der Zinken 18 der beiden Walzen 11,12 in den Boden gewährleistet, ohne daß hierfür zusätzliche Bauteile erforderlich wären. Die bei Vorwärtsfahrt zu einem Absinken neigende vordere Zinkenwalze 11 wird nämlich durch das Gewicht der hinteren Walze 12 angehoben, während diese sich dagegen absenkt.

Die Zinkenwalzen 11,12 sind weitestgehend gleichartig gebaut. Jedoch sind die die Zinkenreihen der vorderen Zinkenwalze 11 enthaltenden Radialebenen relativ zu den die Zinkenreihen der hinteren Zinkenwalze 12 enthaltenden Radialebenen der jeweiligen Walzen in Achsrichtung der Walzen versetzt angeordnet, so daß die Zinken 18 der beiden Zinkenwalzen 11,12 kammartig ineinandergreifen und die Zinkenwalzen 11,12 in Betriebsfahrtrichtung mit vergleichsweise geringem Abstand angeordnet werden können.

Abweichend von der zeichnerisch dargestellten Ausführung können an den Wippen 10 drei miteinander kämmende Zinkenwalzen angeordnet sein, wenn ein gesonders gleichmäßiges Arbeitsergebnis erreicht werden soll. In diesem Falle ist die Schwenkachse Y an den Wippen 10 bevorzugt zwischen der in Betriebsfahrtrichtung vorderen und der mittleren Walze angeordnet.

Wie Fig. 2 zeigt, sind an vielen Radialebenen der Walzen 11,12 über den Umfang des jeweiligen Achskörpers 17 jeweils vier oder mehr Zinken in einer Ebene angeordnet, wobei die in benachbarten Radialebenen der jeweiligen Walze angeordneten Zinken 18 relativ zueinander in Umfangsrichtung der Walze vorzugsweise versetzt angeordnet sind. Die dargestellten Zinkenwalzen 11,12 mit vier bzw. fünf Zinken 18 sind nur beispielhaft gewählt. Grundsätzlich können beide Zinkenwalzen 11,12 auch die gleiche Anzahl von Zinken 18 über den Umfang aufweisen und es können jeweils vier, fünf oder sechs Zinken 18 über den Umfang vorgesehen sein. Je mehr Zinken 18 vorgesehen sind, desto besser ist die Tragfähigkeit der Zinkenwalzen 11,12.

Grundsätzlich kann der Achskörper 17 entsprechend der Anzahl der über den Umfang verteilten Zinken 18 auch einen vieleckigen Querschnitt aufweisen, wobei dann die Zinken 18 flächig an den Seitenflächen des Achskörpers 17 anliegen.

Bevorzugt sind die in jeder mit Zinken besetzten Radialebene einer Walze in Umfangsrichtung aufeinanderfolgenden Zinken 18 miteinander, z.B. durch Verschweißung, verbunden, so daß sich die Zinken 18 gegenseitig stabilisieren. Dies ist bei allen Querschnittsformen des Achskörpers 17 sinnvoll. Das Ablösen eines Zinkens 18 wird hierdurch besonders sicher vermieden.

Wie aus Fig. 3 ersichtlich ist, weisen die Zinken 18 einen winkelförmigen Querschnitt, insbesondere mit einem eingeschlossenen Winkel α von ca. 90° auf, wobei das Winkelprofil einen in Umlaufrichtung der Walze weisenden Keil bildet. Die freien Stirnenden der Zinken 18 sind bevorzugt gerade, quer zur Zinkenlängsachse abgeschnitten. Die Zinken 18 können dabei aus Abschnitten eines Walzprofiles bestehen.

Die Ausgestaltung der Zinken 18 als Winkelprofile, insbesondere Walzprofile, hat zusammen mit der besonders festen Anordnung der Zinken 18 am jeweiligen Achskörper 17 den Vorteil, daß die Zinken 18 praktisch unverlierbar sind. Eine zu starke Belastung führt eher zu einer Verformung der Zinken 18, die aber mit einem Aufsteckrohr leicht wieder rückgängig gemacht werden kann. Dies kann vorteilhafterweise sogar auf dem Feld geschehen.

Wichtig bei den Zinken 18 ist der Öffnungswinkel α, da dieser die Schneidwirkung und die Spaltwirkung der Zinken 18 bestimmt.

Durch die im Querschnitt winkelförmigen Zinken 18 wird bei der Bodenbearbeitung erreicht, daß die Zinken 18 beim Abrollen der Walze auf dem Boden mit ihrer Keilseite leicht in den Boden eindringen und diesen spalten sowie auseinanderdrücken und dann den Boden mit der rinnenförmigen Längsseite der Zinken 18 in Fahrtrichtung zu drängen suchen. Hierdurch wird eine besonders gute Zerkleinerung erreicht. Dadurch, daß die Zinken 18 der beiden Walzen 11,12 ineinandergreifen, wird zum einen gewährleistet, daß sich zwischen den Zinken 18 kein Erdreich ansammelt. Vielmehr reinigen sich die Zinkenwalzen 11,12 gegenseitig. Außerdem wird hierdurch erreicht, daß Erdbrocken nicht seitlich ausweichen können, wenn sie von einem Zinken 18 der jeweils anderen Walze 11,12 zerkleinert werden. Außerdem wird an den Walzen anhaftendes langsträhniges Pflanzengut wirksam zerkleinert.

Die beiden Zinkenwalzen 11,12 werden, wie bereits erwähnt, jeweils indirekt angetrieben, indem sie auf dem Boden abrollen, wenn die Maschine über den Boden bewegt wird. Die Drehung der beiden Zinkenwalzen 11,12 ist dabei bevorzugt voneinander unabhängig, d.h. zwischen den Zinkenwalzen 11,12 ist keinerlei antriebsmäßige Zwangskopplung vorgesehen. Dies verbessert das Bearbeitungsergebnis, da die Walzen 11,12 sich nicht gegenseitig blockieren, sondern sogar reinigen, wenn die eine Walze durch Erdreich verstopft sein sollte. Diese Ausgestaltung der Bearbeitungsmaschine erlaubt eine sehr hohe Bearbeitungsgeschwindigkeit bei gleichzeitig hervorragendem Arbeitsergebnis.

Gegenüber angetriebenen Zinkenwalzen besteht der Vorteil, daß der Boden nicht zu sehr bearbeitet wird, insbesondere zerschlagen die Zinken 18 den Boden nicht. Dennoch wird der Boden sehr fein zerteilt und optimal vorbereitet. Dieses optimale Arbeitsergebnis wird unabhängig von der Bodenart erreicht. Erforderlichenfalls kann die Zinkenzahl entsprechend der Bodenart variiert werden, wie bereits zuvor ausgeführt.

Die Verwendung der Zinkenwalzen 11,12 als Packerwalze ist insbesondere mit sechs oder mehr Zinken 18 in einer Ebene über den Umfang möglich. Hierbei wird der Boden durch die Zinkenwalzen 11,12 in geeigneter Weise verdichtet, wobei jedoch kleine Vertiefungen gebildet werden, in denen sich Regenwasser ansammeln kann. Die Verschlämmungsgefahr und daraus entstehende Emissionsschäden werden dadurch gering gehalten.

Abweichend von der dargestellten Ausführungsform ist es grundsätzlich auch möglich, die Zinken 18 aus Vollmaterial herzustellen. Die Verwendung von Profilmaterial ist jedoch kostengünstiger und einfacher in der Herstellung.

Vor den Zinkenwalzen 11,12 sind am vorderen Querholm 1 des Rahmens Grubber 16 in zwei Querreihen angeordnet, wobei die vorderen Grubber 16 vor dem vorderen Querholm 1 und die hinteren Grubber 16 hinter dem vorderen Querholm 1 angebracht sind. Um einen hinreichenden Längsabstand zwischen den Grubbern 16 gewährleisten zu können, ist der vordere Querholm 1 im Querschnitt rechteckig ausgebildet. Die vertikalen Seitenkanten des vorderen Querholmes 1 erlauben dabei in vorteilhafter Weise eine einfache Höhenverstellung der Grubber 16 gegenüber dem Rahmen.

Bevorzugt ist es, den Rahmen relativ hoch anzuordnen und die Wippen 10 mit den Walzen am Rahmen höhenverschiebbar zu haltern. Der Rahmen ist außerdem bevorzugt so ausgelegt, daß er möglichst vielfältig einsetzbar ist. Insbesondere sollen möglichst viel Kombinationen von Bearbeitungswerkzeugen am Rahmen unterbringbar sein. Diese können beispielsweise an den Querholmen 1 auch in Querrichtung verschiebbar angeordnet sein. Die Querholme 1 können außerdem dafür dienen, am Rahmen seitlich einerseits eine Deichsel und andererseits Radsätze anzubringen, derart, daß sich die Bearbeitungsmaschine quer zur Betriebsfahrtrichtung als Anhänger fortbewegen läßt. Da die Länge der Maschine in Betriebsfahrtrichtung relativ gering gehalten werden kann, ist es dadurch möglich, die Maschine im Straßenverkehr normal zu bewegen, andererseits kann die Maschine eine extreme Arbeitsbreite aufweisen.

Schließlich zeigt Fig. 4 einen zentralen Planierschieber 19 sowie seitlich davon angeordnete äußere Schieber 20. Der Planierschieber 19 ist keilförmig ausgebildet und weist zwei konkav gebogene Stirnflächen 21 auf. Die beiden äußeren Schieber 20 sind quer zur Betriebsfahrtrichtung der Bearbeitungsmaschine gemäß Pfeilen II verstellbar.

Diese Schieberwerkzeuge können vor den Grubbern 16 angeordnet sein und von den Rädern des Zugfahrzeuges hinterlassene Spuren oder sonstige Bodenunebenheiten unter Seitwärtsverschiebung von Erdmaterial einebnen.

Zwischen den Grubbern 16 und den Zinkenwalzen 11,12 können noch weitere Zusatzbearbeitungselemente vorgesehen sein. Ebenso können, wie dargestellt, auch hinter den beiden Zinkenwalzen 11,12 weitere Bearbeitungsgeräte vorhanden sein.

## Patentansprüche

1. Landwirtschaftliche Bodenbearbeitungsmaschine, vorzugsweise im Form eines an ein Zugfahrzeug ankoppelbaren Gerätes, mit zumindest einer quer zur Fahrtrichtung von Zugfahrzeug bzw. Bodenbearbeitungsmaschine ausgerichteten und durch Eingriff ihrer Zinken (18) in den Boden passiv angetriebenen Zinkenwalze (11,12), deren Zinken als im wesentlichen geradlinige Teile ausgebildet und tangential zu einem zur Walzensachse gleichachsigen Zylinder in voneinander beabstandeten Radialebenen der Zinkenwalze (11,12) angeordnet sind, derart, daß die freien Zinkenenden bei Vorwärtsfahrt von Zugfahrzeug bzw. Bodenbearbeitungsmaschine in der Drehrichtung der Zinkenwalze entgegengesetzter Richtung weisen,
**dadurch gekennzeichnet,**
daß die in Drehrichtung der Walze (11,12) weisenden (vorderen) Längsseiten der Zinken (18) keilförmiges Profil mit in Drehrichtung weisender Keilspitze und die entgegengesetzten (rückseitigen) Längsseiten der Zinken rinnenförmig konkaves Profil aufweisen.

2. Bodenbearbeitungsmaschine nach Anspruch 1,
**dadurch gekennzeichnet,**
daß die Zinken (18) einen winkelförmigen Querschnitt, insbesondere einen rechtwinklig winkelförmigen Querschnitt aufweisen.

3. Bodenbearbeitungsmaschine nach Anspruch 1 oder 1,
**dadurch gekennzeichnet,**
daß die Zinken (18) aus Walzprofilstücken bestehen.

4. Bodenbearbeitungsmaschine nach einem der Ansprüche 1 bis 3,
**dadurch gekennzeichnet,**
daß jede Zinke (18) an ihrem vom freien Zinkenende abgewandten Ende mit einem Endbereich ihrer keilförmigen Längsseite in die konkave Längsseite der dem vorgenannten Zinkenende benachbarten Zinke hineinragt und mit letzterer verbunden ist.

5. Bodenbearbeitungsmaschine nach einem der Ansprüche 1 bis 4,
**dadurch gekennzeichnet,**
daß mindestens zwei Zinkenwalzen (10,11) hintereinander angeordnet sind, wobei die die Zinken (18) aufweisenden Radialebenen jeder Walze zwischen den die Zinken aufweisenden Radialebenen der benachbarten Walze bzw. Walzen angeordnet sind und die Zinken (18) benachbarter Walzen (10,11) kammartig ineinandergreifen.

6. Bodenbearbeitungsmaschine nach einem der Ansprüche 1 bis 5,
**dadurch gekennzeichnet,**
daß die Abstandsräume zwischen den die Zinken (18) aufweisenden Radialebenen einer Walze (10,11) derart eng bemessen sind, daß bei hintereinander mit kammartig ineinandergreifenden Zinken angeordneten Walzen (10,11) die Zinken der benachbarten Walzen berührungsfrei aneinander vorbeilaufen, einander jedoch von anhaftender Erde bzw. strähnigem Pflanzengut wirksam zu befreien vermögen.

7. Bodenbearbeitungsmaschine nach einem der Ansprüche 1 bis 6,
**dadurch gekennzeichnet,**
daß - insbesondere bei Einsatz der Maschine auf steinigen Böden - an den Walzen (11,12) in jeder mit Zinken (18) belegten Radialebene mehr als vier Zinken (18) angeordnet sind.

8. Bodenbearbeitungsmaschine nach einem der Ansprüche 1 bis 7,
**dadurch gekennzeichnet,**
daß mehrere Zinkenwalzen (11,12) in Arbeitsrichtung (I) der Maschine hintereinander an Wippen (10) angeordnet sind, welche um eine quer zur Arbeitsrichtung (I) verlaufende Achse (Y) schwenkbar am Rahmen angeordnet sind, wobei die Schwenkachse (Y) zum Schwerpunkt der Wippen (10) in Arbeitsrichtung (I) nach vorwärts versetzt angeordnet ist.

9. Bodenbearbeitungsmaschine nach einem der Ansprüche 1 bis 8,
**dadurch gekennzeichnet,**
daß die an der Schwenkachse (Y) anschließenden Hebelarme der Wippen (10) bei Anordnung von zwei Walzen (11,12) an den Wippen (10) ein Verhältnis von ca. 1 : 1,1 bis ca. 1 : 1,3 bzw. insbesondere 1 : 1,2 aufweisen, und daß die Schwenkachse (Y) bei Anordnung von drei Walzen an den Wippen (10) zwischen der vorderen Walze und der mittleren Walze angeordnet ist.

10. Bodenbearbeitungsmaschine nach einem der Ansprüche 1 bis 9,
**dadurch gekennzeichnet,**
daß die Maschine folgende Werkzeuge aufweist:
- vordere Grubber (16), welche vorzugsweise in zwei Querreihen hintereinander angeordnet sind, wobei die Grubber der zweiten Querreihe, bei Ansicht der Maschine in Arbeitsrichtung, zwischen den Grubbern der vorderen Reihe angeordnet sind,
- ein Zinkenwalzenaggregat mit mindestens zwei hintereinander angeordneten Zinkenwalzen (11,12), deren Zinken (18) miteinander kämmen, und vorzugsweise
- in Arbeitsrichtung der Maschine vor den Grubbern (16) angeordnete Schieberwerkzeuge (19,20), welche durch Seitwärtsverschiebung von Erdmaterial von den Rädern des Zugfahrzeuges hinterlassene Fahrspuren und/oder sonstige Erdwälle, Furchen bzw. Bodenunebenheiten einebnen.
